# NOUVEAU FASCICULE DE BREVET EUROPEEN

(11) **EP 0 296 919 B2**
(45) Date de publication et mention de la décision concernant l'opposition: **26.01.1994**
(45) Mention de la délivrance du brevet: 25.04.1990
(21) Numéro de dépôt: 88401403.6
(22) Date de dépôt: 09.06.1988
(51) Int. Cl.: F16L 33/02

(54) **Collier de serrage**
Schlauchklemme
Clamping collar

(30) Priorité: 23.06.1987 FR 8708831
(43) Date de publication de la demande: 28.12.1988
(73) Titulaire: Etablissements CAILLAU, F-92130 Issy-les-Moulineaux (FR)
(72) Inventeur: Calmettes, Lionel, F-41200 Romorantin (FR); André, Michel, F-41200 Romorantin (FR)
(74) Mandataire: Descourtieux, Philippe

(56) Documents cités:
- EP-A- 0 003 192
- EP-A- 0 153 483
- CH-A- 442 902
- DE-A- 3 306 284
- US-A- 2 335 464
- US-A- 2 614 304
- US-A- 2 847 742
- US-A- 3 475 793
- US-A- 3 579 754

## Description

On connaît déjà, par le brevet EP-A- 0 003 192, un collier de serrage facilement démontable et réutilisable destiné notamment, mais non exclusivement, à la fixation d'un manchon ou tube souple sur un tuyau rigide.

Un tel collier est constitué par une bande métallique enroulée sur elle-même, dont les extrémités sont convenablement pliées pour former des moyens complémentaires de serrage et d'accrochage. Les moyens de serrage sont constitués par des oreilles formant butées radiales sur lesquelles peuvent prendre appui les mâchoires d'un outil du genre pince Les moyens d'accrochage sont eux-mêmes constitués par deux éléments complémentaires en forme générale de crochets. A l'état non serré du collier, les deux éléments complémentaires d'accrochage sont distants l'un de l'autre mais viennent coopérer l'un avec l'autre après le serrage du collier et maintiennent ainsi le collier dans sa position serrée.

Un tel collier donne toute satisfaction dans un grand nombre d'applications, mais il est apparu nécessaire d'en améliorer la conception pour tenir compte de certaines exigences, tant des utilisateurs que de la fabrication.

En effet, on peut reprocher à ce collier connu de nécessiter une pince spéciale pour son montage ; or les utilisateurs souhaiteraient disposer d'un collier dont la mise en place pourrait s'effectuer à l'aide d'une "pince plate" du commerce.

D'autre part, les moyens d'accrochage, nécessairement en saillie sur la périphérie extérieure du collier, risquent, s'ils sont montés sur des organes mobiles, par exemple sur des arbres rotatifs, soit d'être dégrafés, soit d'agripper des objets. Il en est ainsi notamment lorsque les colliers en cause sont utilisés pour la fixation de soufflets protecteurs des cardans des arbres de transmission d'un véhicule. On souhaite, par conséquent, que les moyens d'accrochage du collier soient protégés contre toute approche dangereuse d'objets.

Enfin, en ce qui concerne la fabrication, il faut noter que le collier connu nécessite la combinaison de plusieurs techniques (roulage, pliage, emboutissage), ce qui exige des machines et des outillages quelque peu compliqués et onéreux. En outre, chaque collier a des dimensions spécifiques et il n'est pas possible, comme cela a déjà été proposé pour d'autres types de colliers, notamment par le brevet EP-A-0 153 542, de réaliser séparément les différentes parties du collier, ce qui permettrait de rationaliser la fabrication et d'en diminuer le coût.

L'invention vise à remédier aux difficultés qui viennent d'être énoncées tout en conservant les avantages du collier antérieur décrit par le brevet EP-A-0 003 192. A cet effet, l'invention propose un collier de serrage tel que défini dans la revendication 1

L'invention sera mieux comprise et d'autres caractéristiques ainsi que ses avantages apparaîtront au cours de la description qui va suivre de quelques modes d'exécution, en référence aux dessins annexés, dans lesquels :
- la figure 1 est une vue en élévation d'un collier selon l'invention, à l'état non serré,
- la figure 2 est une vue en perspective d'un collier selon la figure 1, monté et serré sur un tube souple emmanché sur un tuyau rigide,
- la figure 3 est une vue de détail d'un moyen de fixation d'un ensemble de serrage et d'accrochage sur l'une des extrémités du collier,
- la figure 4 est une vue, analogue à la figure 1, d'une variante avantageuse de réalisation,

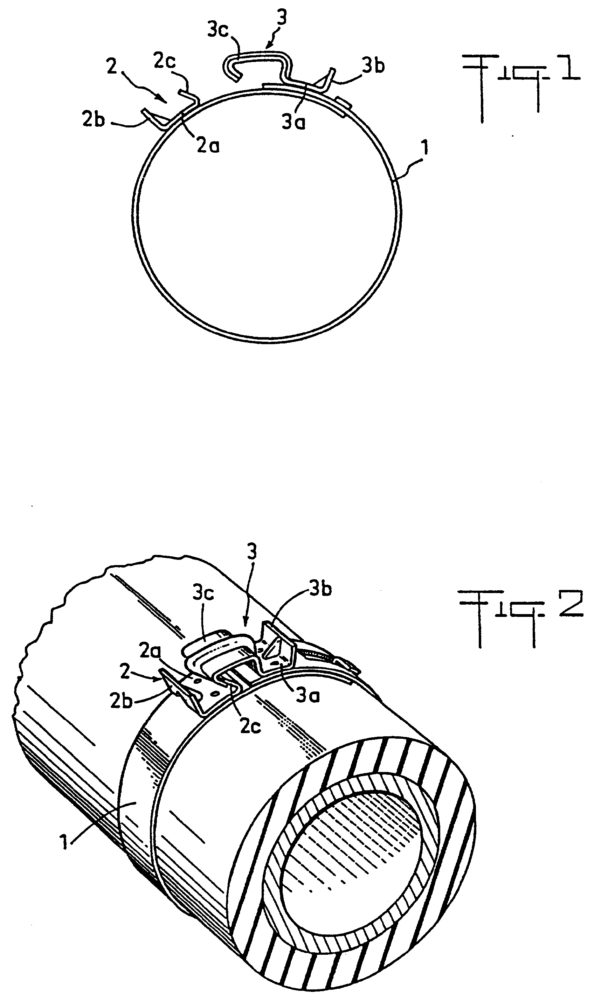

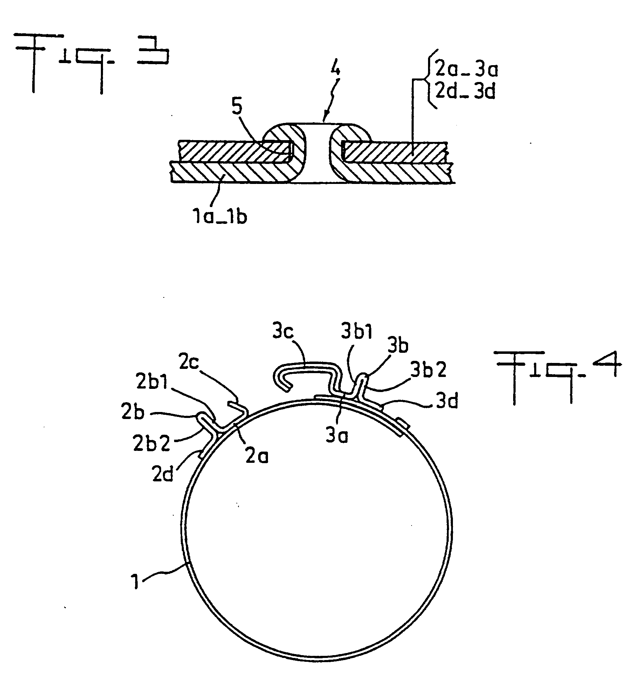

Si l'on se reporte tout d'abord aux figures 1 et 2, on voit que le collier est constitué essentiellement par une bande métallique 1 enroulée sur elle-même. L'extrémité intérieure 1a du collier s'étend quelque peu sous l'extrémité extérieure 1b pour des raisons déjà exposées dans le brevet EP-A-0 003 192, cependant que les deux extrémités présenteront avantageusement certaines au moins des dispositions proposées par les brevets EP-A-236 217, publié 9.9.87, et EP-A-243 224, publié 28.10.87, de la demanderesse.

Au voisinage des extrémités 1a et 1b sont fixés deux ensembles 2 et 3 de moyens complémentaires de serrage et d'accrochage.

Tels qu'ils sont représentés sur les figures 1 et 2, les ensembles 2 et 3 sont constitués par des portions de bande 2a, 3a, parallèles à la bande 1, dont les deux extrémités les plus éloignées l'une de l'autre sont coudées pour former chacune un pli radial 2b, 3b, dirigé vers l'extérieur du collier. Les deux plis radiaux 2b, 3b constituent sur chacune des extrémités de la bande 1 des butées susceptibles d'être appréhendées par l'outil de serrage, tel qu'une "pince plate" du commerce.

Les extrémités les plus proches l'une de l'autre des portions de bande 2a, 3a sont elles-mêmes pliées en forme de crochets 2c, 3c dirigés, l'un vers l'extérieur du collier, l'autre vers l'intérieur, de façon à pouvoir coopérer l'un avec l'autre comme on l'indiquera plus loin.

Il faut cependant souligner que les hauteurs des plis radiaux 2b, 3b sont de préférence égales l'une à l'autre et voisines de la distance maximale entre la périphérie extérieure du collier et les pliures constituant les crochets 2c, 3c. Dans le cas représenté au dessin, cette distance maximale est définie par le crochet 3c qui est le plus saillant par rapport au collier.

Chaque ensemble 2, 3 est réalisé dans une bande métallique qui présentera en général la même qualité ainsi que la même largeur et la même épaisseur que la bande 1. Toutefois, il peut être avan tageux de choisir une bande métallique différente, notamment en ce qui concerne son épaisseur, de celle du collier lui-même.

La fixation des ensembles 2, 3 sur les extrémités 1a, 1b de la bande 1 peut être obtenue par tout moyen approprié. En particulier, on peut effectuer le soudage par points de la portion centrale 2a, 3a sur la bande 1.

Il est également avantageux de prévoir, au cours de l'assemblage des différentes parties du collier, la formation, dans la bande 1, d'aspérités sensiblement cylindriques dirigées vers l'extérieur du collier. Des trous 5 seront prévus en correspondance dans les portions centrales 2a, 3a et, après les avoir engagés sur les aspérités de la bande, les extrémités libres de ces dernières seront matées pour constituer ainsi des rivets 4 de fixation de chaque ensemble 2, 3 sur les extrémités correspondantes de la bande 1 (figure 3).

Si l'on se reporte maintenant à la figure 4, on voit une variante de réalisation du collier qui vient d'être decrit ; les éléments communs déjà décrits portent les mêmes références que ceux des figures 1 et 2 et ne seront pas repris ici.

Pour des raisons qui apparaîtront plus loin, on notera, cependant, que chaque pli radial 2b, 3b est constitué par deux éléments 2b1, 2b2 - 3b1, 3b2 adossés l'un à l'autre.

Les éléments 2b2 et 3b2 les plus éloignés du crochet 2c, 3c correspondant sont avantageusement pourvus d'un coude 2d, 3d dirigé parallèlement à la périphérie du collier, pratiquement dans le prolongement de la portion centrale correspondante 2a, 3a.

Dans cette variante de réalisation, les moyens de fixation des ensembles 2, 3 sur la bande 1 seront, de préférence en totalité mais au moins en partie, disposés sur les coudes 2d, 3d, qu'il s'agisse de points de soudure ou de rivets tels que ceux représentés sur la figure 3.

Enfin il faut souligner que les deux ensembles 2, 3 de moyens complémentaires de serrage et d'accrochage, décrits dans l'une ou l'autre variante de réalisation, peuvent être assemblés indifféremment à l'une ou l'autre des extrémités intérieure 1a ou extérieure 1b de la bande 1.

Le fonctionnement et les avantages du collier ci-dessus décrit, dans l'une ou l'autre de ses variantes sont déjà apparus l'homme du métier. Les butées 2b, 3b présentent des surfaces radiales suffisantes pour être appréhendées facilement par les mâchoires d'une "pince plate" du commerce. Le rapprochement de ces butées 2b, 3b permet le serrage du collier jusqu'à l'engagement des deux crochets 2c, 3c qui maintienent alors le collier dans sa position serrée visible sur la figure 2.

Dans cette position serrée, les plis radiaux 2b, 3b constituent en quelque sorte des déflecteurs empêchant tout objet de s'agripper dans les moyens d'accrochage 2c, 3c. Ils permettent aussi, bien évidemment, à nouveau à l'aide d'une simple "pince plate", de démonter le collier en dégageant l'un de l'autre les crochets 2c, 3c.

D'autre part, on soulignera un avantage particulier de la variante représentée sur la figure 4. La fixation des ensembles 2, 3 sur la bande 1, essentiellement par des moyens prévus sur les coudes 2d, 3d, a pour conséquence que ces moyens (soudure ou rivet) sont sollicités au cisaillement au cours du serrage du collier. Les risques de destruction de ces moyens de fixation pendant le serrage du collier sont ainsi diminués par rapport à la réalisation selon la figure 1. Dans ce dernier cas en effet, il est difficile d'éviter une légère déformation en "roulage" de la portion centrale 2a, 3a et les risques d'arrachement des moyens de fixation.

Enfin, on notera que la fabrication d'un collier selon l'invention est rendue plus facile et plus rationnelle et permet la réalisation de colliers de diverses dimensions au moyen de pièces communes. En effet, le roulage de la bande 1 et la fabrication des ensembles 2 et 3 sont réalisés sur des machines et avec des outillages spécifiques et, d'autre part, les mêmes ensembles 2 et 3 peuvent être utilisés quel que soit le diamètre du collier.

## Revendications

1. Collier de serrage, démontable et réutilisable, constitué par une bande métallique *(1)* enroulée sur elle-même, comportant respectivement au voisinage de chacune de ses extrémités, d'une part, deux butées radiales dirigées vers l'extérieur de la bande pour constituer des moyens de serrage complémentaires susceptibles d'être appréhendés par un outil du genre pince, d'autre part, des moyens d'accrochage complémentaires en forme générale de crochets, qui, à l'état non serré du collier, sont distants l'un de l'autre, la hauteur radiale desdites butées étant sensiblement égale à la distance maximale entre la périphérie externe du collier et les crochets, caractérisé en ce que chaque ensemble d'un moyen de serrage et d'un moyen d'accrochage est constitué par une portion de bande métallique *(2,3)* indépendante de la bande *(1)* constituant le collier et fixée sur celle-ci par tout moyen approprié, les moyens de serrage étant situés aux extrémités les plus éloignées l'une de l'autre des deux portions de bande *(2,3)* et constitués, à chacune desdites extrémités, par un pli (*2**b**,3**b*) dirigé radialement vers l'extérieur du collier, cependant que les extrémités les plus proches l'une de l'autre desdites portions *(2,3)* sont convenablement pliées pour constituer des crochets complémentaires *(2**c**,3**c**).*

2. Collier de serrage selon la revendication 1, caractérisé en ce que le pli radial (2b, 3b) formant la butée d'un ensemble est constitué par deux éléments de bande (2b1, 2b2 - 3b1, 3b2) adossés l'un à l'autre, l'élément (2b2, 3b2) le plus éloigné du crochet (2c, 3c) associé à ladite butée étant lui-même pourvu d'un coude (2d, 3d) dirigé parallèlement la périphérie du collier.

3. Collier de serrage selon l'une quelconque des revendications 1 et 2, caractérisé en ce que les moyens de fixation, sur la bande (1) du collier d'un ensemble (2, 3) d'un moyen de serrage et d'un moyen d'accrochage, sont situés entre le crochet et le pli radial dudit ensemble.

4. Collier de serrage selon la revendication 2, caractérisé en ce que les moyens de fixation sur la bande (1) du collier d'un ensemble (2, 3) d'un moyen de serrage et d'un moyen d'accrochage sont situés, au moins en partie, mais de préférence en totalité, sur le coude (2d, 3d) éloigné du crochet prolongeant l'un des deux éléments (2b2, 3b2), formant le pli radial (2b,3b).

5. Collier de serrage selon l'une quelconque des revendications précédentes, caractérisé en ce que la fixation, sur la bande (1) du collier, de la portion de bande constituant un ensemble (2, 3) d'un moyen de serrage et d'un moyen d'accrochage, est obtenue au moyen d'une soudure par points.

6. Collier de serrage selon l'une quelconque des revendications 1 à 4, caractérisé en ce que la fixation, sur la bande (1) du collier, de la portion de la bande constituant un ensemble (2, 3) d'un moyen de serrage et d'un moyen d'accrochage, est obtenue par formation d'un rivet (4).

7. Collier de serrage selon la revendication 6, caractérisé en ce que le rivet (4) est constitué par une aspérité réalisée dans la bande (1) constituant le collier traversant un trou (5) ménagé dans une zone convenable de la portion rapportée (2a, 3a - 2d, 3d) de bande et matée sur cette dernière.

## Patentansprüche

1. Abnehmebare und wiederverwendbare Schlauchklemme, bestehend aus einem aufgerollten Metallband (1), welches nahe jedem seiner Enden einerseits zwei vom Band nach aussen gerichtete radiale Anschläge zur Bildung von komplementären mit einem Werkzeug des Zangentyps erfassbaren Klemmitteln bzw. anderseits komplementäre Verhakungsmittel von allgemeiner Hakenform umfasst, die sich im nichtgeklemmten Zustand der Schlauchklemme im Abstand voneinander befinden, wobei die radiale Höhe der genannten Anschläge im wesentlichen gleich dem maximalen Abstand zwischen dem Aussenumfang der Schlauchklemme und den Haken ist, dadurch gekennzeichnet, dass jede Gruppe eines Klemmittels und eines Verhakungsmittels durch einen Metallbandabschnitt (2, 3) gebildet ist, der unabhängig von dem die Schlauchklemme bildenden Band (1) und durch jedes geeignete Mittel auf diesem fixiert ist, wobei die Klemmittel an den voneinander entferntesten Enden der beiden Bandabschnitte (2, 3) angeordnet und an jedem der genannten Enden durch eine von der Schlauchklemme radial nach aussen gerichtete Aufbiegung (2b, 3b) gebildet sind, während die einander nächsten Enden der genannten Abschnitte (2, 3) zur Bildung der komplementären Haken (2c, 3c) zweckmässig gebogen sind.

2. Schlauchklemme nach Anspruch 1, dadurch gekennzeichnet, daß die den Anschlag einer Gruppe bildende radiale Aufbiegung (2b, 3b) durch zwei aneinander anliegende Bandelemente (2b1, 2b2-3b1, 3b2) gebildet ist, wobei das vom Haken (2c, 3c) weiter entfernt liegende und dem Anschlag zugeordnete Element (2b2, 3b2) selbst mit einem Bogenstück (2d, 3d) versehen ist, welches parallel zum Umfang der Schlauchklemme gerichtet ist.

3. Schlauchklemme nach einem der Ansprüche 1 und 2, dadurch gekennzeichnet, daß die Mittel zur Fixierung einer Gruppe (2, 3) aus Klemmittel und Verhakungsmittel auf dem Band (1) der Schlauchklemme zwischen dem Haken und der radialen Aufbiegung der Gruppe angeordnet sind.

4. Schlauchklemme nach Anspruch 2, dadurch gekennzeichnet, daß die Mittel zur Fixierung einer Gruppe (2, 3) aus Klemmittel und Verhakungsmittel auf dem Band (1) der Schlauchklemme zumindest teilweise, aber bevorzugterweise zur Gänze auf dem vom Haken entfernten Bogenstück (2d, 3d), das eines der beiden Elemente (2b2, 3b2) verlängert, angeordnet sind, wodurch die radiale Aufbiegung (2b, 3b) gebildet wird.

5. Schlauchklemme nach einem der vorhergehenden Ansprüche, dadurch gekennzeichnet, daß die Fixierung des eine Gruppe (2, 3) aus Klemmittel und Verhakungsmittel bildenden Bandabschnitts auf dem Band (1) der Schlauchklemme durch Punktschweißung erzielt wird.

6. Schlauchklemme nach einem der Ansprüche 1 bis 4, dadurch gekennzeichnet, daß die Fixierung des eine Gruppe (2, 3) aus Klemmittel und Verhakungsmittel bildenden Bandabschnitts auf dem Band (1) der Schlauchklemme durch Bildung einer Niete (4) erzielt wird.

7. Schlauchklemme nach Anspruch 6, dadurch gekennzeichnet, daß die Niete (4) durch eine in dem die Schlauchklemme bildenden Band (1) vorgesehene Unebenheit gebildet ist, die durch ein Loch (5) geht, welches in einem geeigneten Bereich des zusammengesetzten Abschnitts (2a, 3a-2d, 3d) des Bandes, der auf letzterem aufgetaucht ist, vorgesehen ist.

## Claims

1. Clamp, adapted to be dismounted and re used, constituted by a metal band *(1)* wound on itself, comprising respectively in the vicinity of each of its ends, on the one hand, two radial stops directed outwardly of the band to constitute complementary tightening means adapted to be gripped by a tool of the pliers type, on the other hand, complementary joining means generally in the form of hooks which, in the non-tightened state of the clamp, are at a distance from each other, while the radial height of said stops is substantially equal to the maximum distance between the outer periphery of the clamp and the hooks, characterized in that each assembly of a tightening means and of a joining means is constituted by a portion of metal band *(2-3)* which is independant of the band *(1)* constituting the clamp and is fixed thereon by any appropriate means, the tightening means being located at the ends of the two band portions *(2-3)* which are the most remote from one other and being constituted, at each of said ends, by a fold *(2**b**-3**b**)* directed radially outwardly of the clamp, while the ends of said portions *(2-3)* which are the nearest of one other are suitable bent to constitute complementary hooks.

2. Clamp according to claim 1, characterized in that the radial fold (2b, 3b) forming the stop of an assembly is constituted by two band elements (2b1, 2b2-3b1, 3b2) back to back, the element (2b2, 3b2) most remote from the hook (2c, 3c) associated with said stop itself being provided with a band (2d, 3d) directed parallel to the periphery of the clamp.

3. Clamp according to any one of claims 1 and 2, characterized in that the means for fixing, on the band (1) of the clamp an assembly (2, 3) of a tightening means and of a joining means, are located between the hook and the radial fold of said assembly.

4. Clamp according to claim 2, characterized in that the means for fixing on the band (1) of the clamp an assembly (2, 3) of a tightening means and of a joining means. are located, at least in part, but preferably completely, on the bend (2d, 3d) remote from the hook extending one of the two elements (2b2, 3b2) forming the radial fold (2b, 3b).

5. Clamp according to any one of the preceding claims, characterized in that fixation on the band (1) of the clamp of the band portion constituting an assembly (2, 3) of a tightening means and of a joining means, is obtained by means of spot welding.

6. Clamp according to any one of claims 1 to 4, characterized in that fixation, on the band (1) of the clamp, of the portion of band constituting an assembly (2, 3) of a tightening means and of a joining means, is obtained by formation of a rivet (4).

7. Clamp according to claim 6, characterised in that the rivet (4) is constituted by a part in relief made on the band (1) constituting the clamp passing through a hole (5) made in a suitable zone of the added portion (2a, 3a-2d, 3d) of band and caulked thereon.
